# NEW EUROPEAN PATENT SPECIFICATION

(11) **EP 0 227 470 B2**
(45) Date of publication and mention of the opposition decision: **10.07.1996**
(45) Mention of the grant of the patent: 26.02.1992
(21) Application number: 86310056.6
(22) Date of filing: 23.12.1986
(51) Int. Cl.: C08J 5/18, B32B 17/10, C09J 123/08, C08F 255/02

(54) **Transparent films and laminates having the same**
Transparente Folien und solche Folien enthaltende Laminate
Feuilles transparentes et stratifiés les contenant

(30) Priority: 23.12.1985 JP 287987/85
(43) Date of publication of application: 01.07.1987
(73) Proprietor: Bridgestone Corporation, Tokyo 104 (JP)
(72) Inventor: Tanuma, Itsuo, Sayama City Saitama Pref. (JP); Takeichi, Hideo, Tanashi-City Tokyo (JP); Ohtsuru, Hiromi, Akigawa City Tokyo (JP); Honda, Toshio, Akigawa City Tokyo (JP)
(74) Representative: Whalley, Kevin

(56) References cited:
- EP-A- 0 076 709
- FR-A- 1 225 704
- FR-A- 2 346 398
- US-A- 4 102 722
- US-A- 4 137 364
- US-A- 4 161 556
- US-A- 4 187 340
- KAUTSCHUK UND GUMMI, 14. Jahrgang, Heft 2, Februar 1961, S. WT23-WT32, H. Bartl et al.

## Description

This invention relates to a transparent film and to various laminates having the same.

There has hitherto been proposed a method wherein a transparent film consisting mainly of ethylene vinyl acetate copolymer is used as an intermediate layer in a sandwich glass (Japanese Patent Application laid open No. 57-196,747). The transparent film of ethylene vinyl acetate copolymer overcomes a disadvantage in a transparent film of polyvinyl butyral in the prior art, namely that the heat resistance or the humidity resistance is poor, but produces a haze (white haze) in a cooling cycle. When the cooling is further progressed, the haze substantially disappears, but a little haze still remains.

In particular, when a laminate having such a film is produced with the use of an autoclave, the cooling rate is low, so that the haze remaining rate is high, and as a result the transparency is somewhat lowered.

The present inventors have made various investigations in order to overcome or at least mitigate the above problems and have found that a highly transparent film having substantially no haze can be produced by using as a main component an ethylene vinyl acetate copolymer triallyl isocyanurate-crosslinked structure (abbreviated as EVAT hereinafter) instead of an ethylene vinyl acetate copolymer.

Thus, according to a first aspect of the invention. there is provided a transparent film comprising mainly ethylene vinyl acetate copolymer triallyl isocyanurate-crosslinked structure (EVAT) in which the content of vinyl acetate units in the ethylene vinyl acetate copolymer is 15-50% by weight and the content of triallyl isocyanurate units is not more than 5 parts by weight based on 100 parts by weight of ethylene vinyl acetate copolymer.

Preferably the EVAT is obtained by mixing the ethylene vinyl acetate copolymer with the triallyl isocyanurate to polymerize the triallyl isocyanurate and at the same time to crosslink the ethylene vinyl acetate copolymer with the triallyl isocyanurate.

According to a second aspect of the invention, there is provided a laminate having a transparent film according to the invention.

The invention in another aspect provides a laminate characterized by comprising a glass sheet, a module for a solar cell and a transparent film according to the invention interposed therebetween.

The invention in yet another aspect provides a laminate characterized by comprising a glass sheet, a liquid crystal display panel and a transparent film according to the invention interposed therebetween.

The invention in still another aspect provides a laminate characterized by comprising a glass sheet, an electroluminescence panel and a transparent film according to the invention interposed therebetween.

The haze-occurring phenomenon is believed to result from a non-uniform distribution of refractive index, which is caused by temporarily producing a microscopic regularly folded structure of ethylene chains in ethylene vinyl acetate copolymer. Accordingly, in order to prevent the occurrence of haze, the production of the microscopic structure should be controlled. For this purpose, the molecular structure itself of ethylene vinyl acetate copolymer must be changed. Under such a state, it has been found that the EVAT structure can substantially prevent the haze-occurring phenomenon, whereby it is possible to produce a very transparent film.

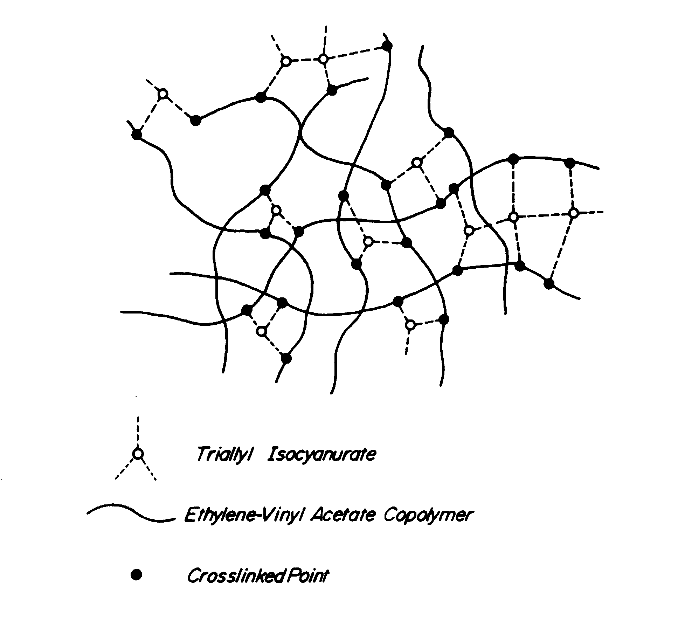

The triallyl isocyanurates are radically polymerized with each other in the ethylene vinyl acetate copolymer (abbreviated as EVA hereinafter) and at the same time reacted with the EVA to form a polymer of EVA with triallyl isocyanurate, which polymer has a complicated EVAT structure as shown in the accompanying drawing, which is a schematic illustration showing a polymerized and crosslinked state of EVA and triallyl isocyanurate in a transparent film according to the invention. Due to such a structure, it is hard to produce the microscopic structure of ethylene molecular chains and thus haze does not substantially occur.

The triallyl isocyanurate is a polymerizable monomer and cannot be extracted in a solvent extraction of EVAT and the EVAT is very transparent, so that it is considered that the EVA is surely bonded to the polymerized triallyl isocyanurate as shown in the drawing, and as a result the EVAT is not an ordinary mixture of EVA with triallyl isocyanurate. If it were a mixture, the film would become white by a light scattering resulting from the uniform distribution of refractive index, and thus the transparency would be lowered.

For the above reason, in the EVAT structure, the haze-occurring phenomenon is substantially not observed despite the period for which the film is exposed to a certain temperature in a cooling and heating cycle.

The structure of EVAT is suitably formed by dissolving the triallyl isocyanurate in the ethylene vinyl acetate copolymer and then subjecting them to a thermal polymerization, a photopolymerization, or a combination thereof. In the thermal polymerization are used radical polymerization initiators such as organic peroxides, and in the photopolymerization are used photopolymerization initiators such as photosensitizers. Further, in the case of using a combination of thermal polymerization and photopolymerization, use may be made of a peroxide and a photosensitizer. Also, electron rays, electromagnetic waves such as α-rays or the like may be irradiated as for the other methods.

There can be used any organic peroxide capable of decomposing at a temperature of 100°C to produce radicals. In consideration of the stability in the compounding, however, the peroxide preferably has a half-life period of 10 hours and a decomposition temperature of not less than 70°C. For instance, mention may be made of 2,5-dimethylhexane-2,5-dihydro peroxide, 2,5-dimethyl-2,5-di(tert-butylperoxy)hexane-3, di-tert-butyl peroxide, tert-butyl cumyl peroxide, 2,5-dimethyl-2,5-di(tert-butylperoxy)hexane, dicumyl peroxide, α,α,-bis(tert-butylperoxyisopropyl) benzene, n-butyl-4,4-bis(tert-butylperoxy) valerate, 2.2-bis(tert-butylperoxy) butane, 1,1-bis(tert-butylperoxy) cyclohexane. 1,1-bis(tert-butylperoxy)-3,3-trimethylcyclohexane, tert-butylperoxy benzoate, and benzoyl peroxide. These organic peroxides may be used alone or as a combination of at least two peroxides. The organic peroxide is preferably used in an amount of not more than 5 parts by weight based on 100 parts by weight of total amount of ethylene vinyl acetate copolymer and triallyl isocyanurate.

There can be used any photosensitizer capable of directly or indirectly producing radicals by irradiating light. For instance, mention may be made of benzoin, benzophenone, benzoin methyl ether, benzoin ethyl ether, benzoin isopropyl ether, benzoin butyl ether, dibenzyl, 5-nitroacenaphthene, hexachlorocyclopentadiene, p-nitrodiphenyl. p-nitroaniline, 2,4,6-trinitroaniline, 1,2-benzanthraquinone, and 3-methyl-1,3-diaza-1,9-benzanthrone. At least one of these photosensitizers is preferably added in an amount of not more than 5 parts by weight based on 100 parts by weight of the total amount of ethylene vinyl acetate copolymer and triallyl isocyanurate.

In order to improve the adhesion between the EVAT and the other material, a silane coupling agent may be added. For this purpose, there may be used well-known silane coupling agents, for example γ-chloropropylmethoxysilane, vinyltrichlorosilane, vinyltriethoxysilane, vinyl-tris(β-methoxyethoxy) silane, γ-methacryloxypropyltrimethoxysilane, β-(3,4-ethoxycyclohexyl) ethyl-trimethoxysilane, γ-glycidoxypropyltrimethoxysilane, vinyltriacetoxysilane, γ-mercaptopropyltrimethoxysilane, γ-aminopropyltriethoxysilane, and N-β-(aminoethyl)-γ-aminopropyltrimethoxysilane. Such a silane coupling agent is preferably added in an amount of not more than 5 parts by weight based on 100 parts by weight of total amount of ethylene vinyl acetate copolymer and triallyl isocyanurate.

In order to improve the stability, if necessary, a polymerization inhibitor such as hydroquinone, hydroquinone monomethyl ether, p-benzoquinone or methylhydro-quinone can be added preferably in an amount of not more than 5 parts by weight as described above.

It is also possible to add a colourant, an UV light absorber, an antioxidant, and/or a colour change inhibitor other than the above.

The colourant may be an inorganic pigment such as metal oxide or metal powder, or an organic pigment such as an azo compound, phthalocyanine compound, ati compound (organic pigment) and acidic or basic dyestuff lake compound and so on.

The UV light absorber may be a benzophenone such as 2-hydroxyl-4-n-octoxybenzophenone or 2-hydroxy-4-methoxy-5-sulfobenzophenone, a benzotriazole such as 2-(2'-hydroxyl-5-methylphenyl) benzotriazole, a salicylate ester such as phenyl salicylate or p-tert-butyl phenyl salicylate, or a hindered amine such as bis(2,2,6,6-tetramethyl-4-piperidine) sebacate.

The antioxidant may be an amine, phenol, bisphenol or hindered amine, for example di-tert-butyl-p-cresol, bis(2,2,6,6-tetramethyl-4-piperidyl)sebacate,pentaerythrytol-tetrakis[3-(3,5-di-tert-butyl-4-hydroxyphenyl)propionate], 2,2'-methylene bis(4-methyl-6-tert-butylphenyl).

The colour change inhibitor may be a salt of a higher fatty acid with cadmium, barium, calcium, zinc, lead, tin, aluminium, magnesium or phosphorus, so called metallic soaps.

The content of vinyl acetate in the EVA used in the EVAT is 15-50% by weight, preferably 19-40% by weight. When the content of vinyl acetate is less than 15% by weight, the transparency may be insufficient in curing at high temperature, while when the vinyl acetate copolymer exceeds 50% by weight, the transparency is good, but the modulus decreases and the viscosity increases, as a result of which a film might not be formed. The content of vinyl acetate is most preferably within a range of 22-30% by weight. In this case, it is possible to obtain a highly transparent EVAT film having a high modulus and not adhered to the other.

The EVAT preferably contains at least 0.5 parts by weight, more preferably at least 1 part by weight, of triallyl isocyanurate based on 100 parts by weight of EVA. When the content of triallyl isocyanurate is less than 0.5 parts by weight, the transparency decreases.

It is considered to be possible to produce various useful laminates by utilizing the advantageous properties of the EVAT, such as high transparency, high strength, suitable extensibility, high weather resistance, and low moisture absorption. As a result of the investigations made by the inventors, it is preferred that the laminate is produced while the EVAT is polymerized and crosslinked. This is due to the fact that the adhesion between the EVAT and the other material in a laminate is maintained at a high level and that air bubbles are apt to be removed between the EVAT and the other material. In this case, the other material may be an inorganic material such as glass, metal, or ceramic, or an organic material such as plastic or wood. In order to make the most of the high transparency of the EVAT, it is particularly preferred to laminate with a transparent glass sheet or a transparent plastic film.

In laminates of EVAT and organic or inorganic material, there may be layer structures such as inorganic material-EVAT-inorganic material, organic material-EVAT-organic material, inorganic material-EVAT-organic material, inorganic material-EVAT and organic material-EVAT. Consequently, it is possible to produce various kinds of very useful laminates as shown below.

In particular, EVAT may be advantageously used in laminates such as safety sandwich glass, solar cell panels, liquid crystal display panels, electroluminescence panels, windows for preventing excoriation of the human body, anti-mist windows, anti-ice windows, electromagnetic wave-shielding windows, and heat-reflecting windows.

As regards safety sandwich glass, the EVAT may be used as an intermediate layer interposed between plane or curved glass sheets, whereby it is possible to obtain a safety glass for buildings or vehicles.

When the EVAT is interposed between a semiconductor wafer and a glass sheet and the resulting laminate assembly is subjected to a contact bonding, it is possible to obtain a solar cell for electric power having a high efficiency of electricity generation since the EVAT has a good transmission.

Likewise, when the EVAT is used as an intermediate layer to be interposed between a plastic film and a transparent or opaque glass sheet, it is possible to produce a window for preventing excoriation of the human body for buildings and vehicles which does not injure a person's face for example with pieces of glass sheet broken by impact of a person therewith.

Further, when similar glass sheets are superposed on each other or a glass sheet is superposed on a plastic film with the EVAT interposed between them, if a conductive or semiconductive material is applied or vapour-deposited on the surface of the glass sheet or plastic film contacted with the EVAT, it is possible to obtain a high performance anti-mist window for buildings and vehicles, anti-ice window, electromagnetic wave-shielding window or heat-reflecting window.

Furthermore, in the production of a liquid crystal display panel or an electroluminescence panel, when various essential components are superposed at the position of light-transmitting path, if EVAT having an excellent transparency and a low moisture vapour permeability is used as an intermediate layer, it is possible to obtain a high performance panel.

As regards plastic films, use may be made of transparent synthetic resins such as polyesters, nylons, acrylics, and polycarbonates, and heat resistance synthetic resins such as polyimides.

The invention will be further described with reference to the following illustrative Examples.

### Examples 1-6

I.
(a) EVA and triallyl isocyanurate were admixed as main components with the other components based on the compounding recipes shown in the following Table 1 in a roller mill heated at about 80° C to prepare 6 EVAT resins.
(b) Each of the above EVAT resins was interposed between polyethylene terephthalate films by means of a press to produce a sheet 0.38 mm in thickness. The sheet was left to stand and cooled to room temperature, and thereafter the polyethylene terephthalate films were peeled off. Then, the resulting EVAT resin sheet was interposed between two float glass sheets each having a thickness of 3mm which were previously washed and dried, and the resulting laminate assembly was introduced into a bag made of polyethylene terephthalate to deaerate the bag and subject the laminate assembly to a prepress bonding at about 80°C. Thereafter, the prepress bonded sandwich glass was introduced into an oven, in which it was heated under atmospheric pressure for 15 minutes after the temperature of the glass surface reached 150°C. The resulting sandwich glasses each had a high transparency and no optical distortion.
(c) In the process of taking out the heated and cured sandwich glass from the oven and cooling it, the existence or otherwise of haze was observed. The results are shown in Table 1. In the sandwich glasses having the EVAT the occurrence of haze was not substantially observed.

### Comparative Examples 1-4

Sandwich glasses were produced in the same manner as in Example 1, except that EVA only or EVA and trimethylol propane trimethacrylate were used as main components, to observe the existence of haze.

As is apparent from the results shown in Table 1, the occurrence of visible haze was observed. In this case, the addition of trimethylol propane trimethacrylate somewhat exhibited an effect based on that addition, but this effect was very small as compared with the invention.

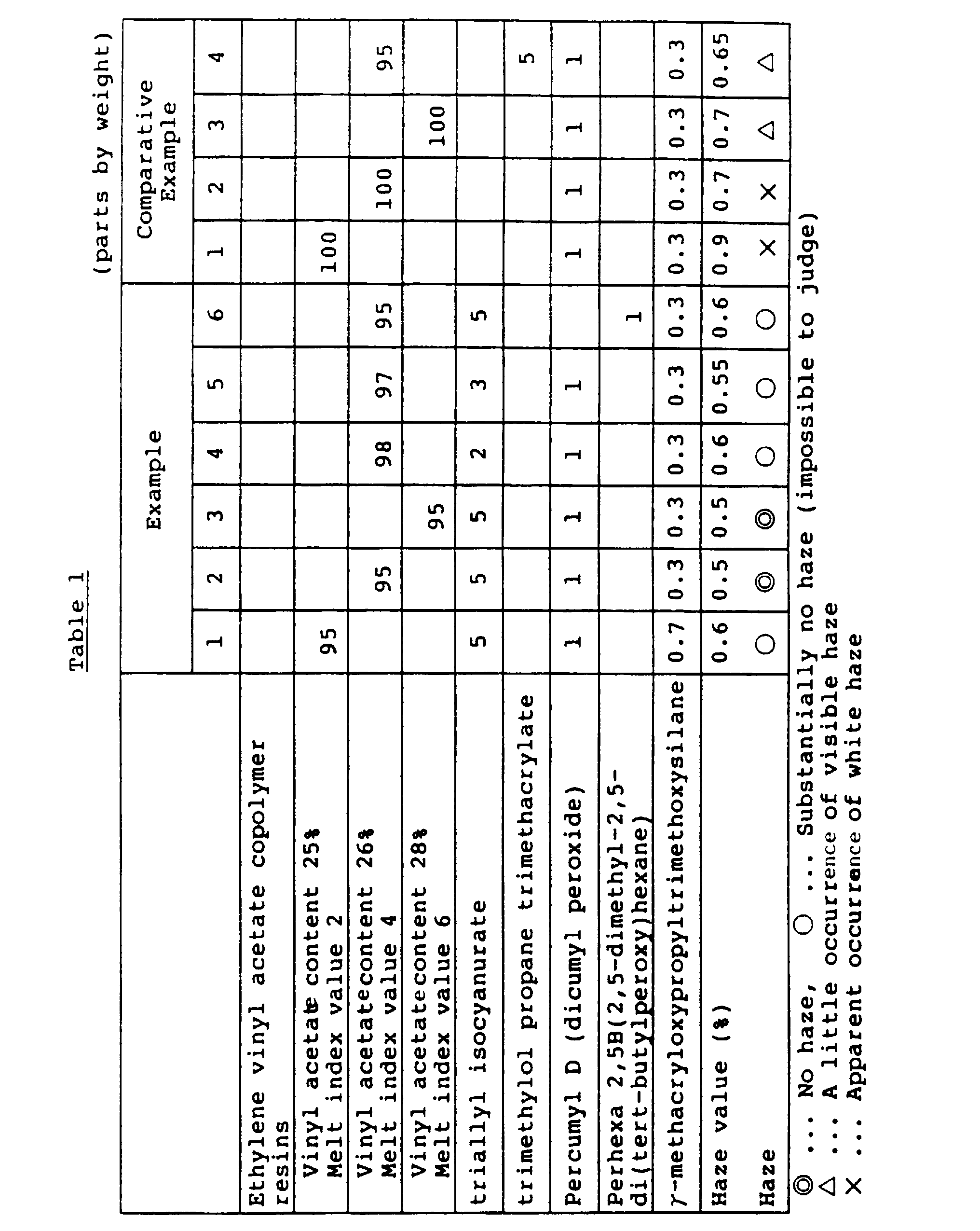

II. Three specimens having a size of 50x50 mm were cut off from the circumference of the center portion of each of the sandwich glasses produced in Examples 1-6 and Comparative Examples 1-4, to measure haze values by means of a Colour Computer SM-3 type made by Suga Sikenki Co. Each of the average values is shown in Table 1.

As is apparent from the results shown in Table 1, according to the invention it is possible to obtain a sandwich glass having substantially the same haze value as that of the glass sheet, given that the haze values of the sandwich glasses of Example 1 to 6 are all not more than 0.6% and the haze value in two float glass sheets each having a thickness of 3 mm is within a range of 0.3-0.5%. As a result, the EVAT apparently has excellent transparency.

III. Four specimens for an impact test according to JIS having a size of 600x600 mm and four specimens for a penetration resistance test having a size of 894x1,829 mm were made respectively from the sandwich glass produced according to the same manner as in Examples 1-6. Then, the impact test (dropping test) and the penetration resistance test (shot back test) were carried out with respect to these specimens. All specimens met the required standards of the tests.

## Claims

1. A transparent film characterized by comprising mainly ethylene vinyl acetate copolymer triallyl isocyanurate-crosslinked structure (EVAT) in which the content of vinyl acetate units in the ethylene vinyl acetate copolymer is 15-50% by weight and the content of triallyl isocyanurate units is not more than 5 parts by weight based on 100 parts of weight of ethylene vinyl acetate copolymer.

2. A transparent film as claimed in claim 1, characterized in that the content of vinyl acetate units is 19-40% by weight.

3. A transparent film as claimed in claim 1 or 2, characterized in that the content of triallyl isocyanurate units is not more than 3 parts by weight.

4. A transparent film as claimed in claim 3, characterized in that the content of triallyl isocyanurate units is not more than 2 parts by weight.

5. A transparent film as claimed in any of claims 1 to 4, characterized in that the content of triallyl isocyanurate units is at least 0.5 parts by weight.

6. A transparent film as claimed in claim 5, characterized in that the content of triallyl isocyanurate units is at least 1 part by weight.

7. A transparent film as claimed in any of claims 1 to 6 characterized in that the EVAT is obtained by mixing the ethylene vinyl acetate copolymer with the triallyl isocyanurate to polymerize the triallyl isocyanurate and at the same time to crosslink the ethylene vinyl acetate copolymer with the triallyl isocyanurate.

8. A transparent film as claimed in claim 7 characterized in the polymerization and the crosslinking reaction are thermally performed.

9. A transparent film as claimed in claim 7, characterized in that the polymerization and the crosslinking reaction are performed by irradiating electron rays or electromagnetic waves such as α-rays.

10. A transparent film as claimed in any claims 1 to 9, characterized in that a silane coupling agent is added.

11. A transparent film as claimed in any of claims 1 to 10, characterized in that a UV light absorber is added.

12. A transparent film as claimed in any of claims 1 to 11, characterized in that an antioxidant is added.

13. A transparent film as claimed in any of claims 1 to 12, characterized in that a colourant is added.

14. A laminate characterized by comprising a transparent film as claimed in any of claims 1 to 13, and an inorganic material sheet.

15. A laminate as claimed in claim 14, characterized in that the inorganic material is a glass.

16. A laminate as claimed in claim 15, characterized in that the transparent film is interposed between two glass sheets to construct a safety sandwich glass or a window for preventing excoriation of the human body.

17. A laminate as claimed in claim 14, characterized in that the inorganic material is a metal.

18. A laminate characterized by comprising a transparent film as claimed in any of claims 1 to 13, and an organic material sheet.

19. A laminate as claimed in claim 18, characterized in that the organic material is a plastic.

20. A laminate characterized by comprising an inorganic material sheet, an organic material sheet and a transparent film as claimed in any of claims 1 to 13 interposed therebetween.

21. A laminate as claimed in claim 20, characterized in that a glass is used as the inorganic material and a plastic as the organic material to construct a window for preventing excoriation of the human body.

22. A laminate characterized by comprising a glass sheet, a module for a solar cell and a transparent film as claimed in any of claims 1 to 13 interposed therebetween.

23. A laminate characterized by comprising a glass sheet, a liquid crystal display panel and a transparent film as claimed in any of claims 1 to 13 interposed therebetween.

24. A laminate characterized by comprising a glass sheet, an electroluminescence panel and a transparent film as claimed in any of claims 1 to 13 interposed therebetween.

25. A laminate for an anti-mist window, anti-ice window, electromagnetic wave-shielding window or heat-reflecting window, characterized by comprising a transparent film as claimed in any of claims 1 to 13, interposed between two glass sheets or a glass sheet and a plastic film, wherein a conductive or semiconductive material is applied or vapour-deposited to the glass sheet or plastic film surface contacted with the transparent film.

## Patentansprüche

1. Transparente Folie, dadurch gekennzeichnet, daß sie hauptsächlich eine mit Triallylisocyanurat vernetzte Ethylenvinylacetat-Copolymerstruktur (EVAT) umfaßt, in welcher der Gehalt an Vinylacetat-Einheiten im Ethylenvinylacetat-Copolymer 15 bis 50 Gew.-% beträgt und der Gehalt an Triallylisocyanurat-Einheiten nicht mehr als 5 Gew.-Teile auf der Grundlage von 100 Gew.-Teilen Ethylenvinylacetat-Copolymer beträgt.

2. Transparente Folie nach Anspruch 1, dadurch gekennzeichnet, daß der Gehalt an Vinylacetat-Einheiten 19 bis 40 Gew.-% beträgt.

3. Transparente Folie nach Anspruch 1 oder 2, dadurch gekennzeichnet, daß der Gehalt an Triallylisocyanurat-Einheiten nicht mehr als 3 Gew.-Teile beträgt.

4. Transparente Folie nach Anspruch 3, dadurch gekennzeichnet, daß der Gehalt an Triallylisocyanurat-Einheiten nicht mehr als 2 Gew.-Teile beträgt.

5. Transparente Folie nach einem der Ansprüche 1 bis 4, dadurch gekennzeichnet, daß der Gehalt an Triallylisocyanurat-Einheiten wenigstens 0,5 Gew.-Teile beträgt.

6. Transparente Folie nach Anspruch 5, dadurch gekennzeichnet, daß der Gehalt an Triallylisocyanurat-Einheiten wenigstens 1 Gew.-Teil beträgt.

7. Transparente Folie nach einem der Ansprüche 1 bis 6, dadurch gekennzeichnet, daß das EVAT durch Vermischen des Ethylenvinylacetat-Copolymers mit dem Triallylisocyanurat gewonnen wird, um das Triallylisocyanurat zu polymerisieren und gleichzeitig das Ethylenvinylacetat-Copolymer mit dem Triallylisocyanurat zu vernetzen.

8. Transparente Folie nach Anspruch 7, dadurch gekennzeichnet, daß die Polymerisierungs- und die Vernetzungsreaktion thermisch ausgeführt werden.

9. Transparente Folie nach Anspruch 7, dadurch gekennzeichnet, daß die Polymerisierungs- und die Vernetzungsreaktion durch Bestrahlung mit Elektronenstrahlen oder elektromagnetischen Wellen, wie beispielsweise α-Strahlen, ausgeführt werden.

10. Transparente Folie nach einem der Ansprüche 1 bis 9, dadurch gekennzeichnet, daß ein Silan-Verbindungsmittel zugesetzt ist.

11. Transparente Folie nach einem der Ansprüche 1 bis 10, dadurch gekennzeichnet, daß ein UV-Lichtabsorptionsmittel zugesetzt ist.

12. Transparente Folie nach einem der Ansprüche 1 bis 11, dadurch gekennzeichnet, daß ein Antioxydationsmittel zugesetzt ist.

13. Transparente Folie nach einem der Ansprüche 1 bis 12, dadurch gekennzeichnet, daß ein Farbstoff zugesetzt ist.

14. Laminat, dadurch gekennzeichnet, daß es eine transparente Folie nach einem der Ansprüche 1 bis 13 und eine Lage aus einem anorganischen Material umfaßt.

15. Laminat nach Anspruch 14, dadurch gekennzeichnet, daß das anorganische Material ein Glas ist.

16. Laminat nach Anspruch 15, dadurch gekennzeichnet, daß die transparente Folie zwischen zwei Glasscheiben eingefügt ist, um ein Sicherheits-Sandwich-Glas oder ein Fenster zu schaffen, das Hautabschürfungen am menschlichen Körper verhindert.

17. Laminat nach Anspruch 14, dadurch gekennzeichnet, daß das anorganische Material ein Metall ist.

18. Laminat, dadurch gekennzeichnet, daß es eine transparente Folie nach einem der Ansprüche 1 bis 13 und eine Lage aus einem organischen Material umfaßt.

19. Laminat nach Anspruch 18, dadurch gekennzeichnet, daß das organische Material ein Kunststoff ist.

20. Laminat, dadurch gekennzeichnet, daß es eine Lage aus einem anorganischen Material, eine Lage aus einem organischen Material und eine zwischen diese eingefügte transparente Folie nach einem der Ansprüche 1 bis 13 umfaßt.

21. Laminat nach Anspruch 20, dadurch gekennzeichnet, daß als das anorganische Material ein Glas und als das organische Material ein Kunststoff verwendet werden, um ein Fenster zu schaffen, das Hautabschürfungen am menschlichen Körper verhindert.

22. Laminat, dadurch gekennzeichnet, daß es eine Glasscheibe, ein Modul für eine Solarzelle und eine zwischen diese eingefügte transparente Folie nach einem der Ansprüche 1 bis 13 umfaßt.

23. Laminat, dadurch gekennzeichnet, daß es eine Glasscheibe, eine Flüssigkristall -Anzeigetafel und eine zwischen diese eingefügte transparente Folie nach einem der Ansprüche 1 bis 13 umfaßt.

24. Laminat, dadurch gekennzeichnet, daß es eine Glasscheibe, eine Elektrolumineszenz-Tafel und eine zwischen diese eingefügte transparente Folie nach einem der Ansprüche 1 bis 13 umfaßt.

25. Laminat für ein beschlagfreies Fenster, ein vereisungssicheres Fenster, ein Fenster zur Abschirmung elektromagnetischer Wellen oder ein wärmereflektierendes Fenster, dadurch gekennzeichnet, daß es eine transparente Folie nach einem der Ansprüche 1 bis 13 umfaßt, die zwischen zwei Glasscheiben oder eine Glasscheibe und eine Kunststoff-Folie eingefügt ist, wobei auf die Oberfläche der Glasscheibe oder der Kunststoff-Folie, die mit der transparenten Folie in Kontakt ist, ein leitendes oder halbleitendes Material aufgetragen oder aufgedampft wird.

## Revendications

1. Feuille transparente caractérisée en ce qu'elle comprend essentiellement une structure de copolymère d'éthylène et d'acétate de vinyle réticulée à l'isocyanurate triallylique (EVAT), dans laquelle la teneur en unités d'acétate de vinyle dans le copolymère d'éthylène et d'acétate de vinyle représente 15 à 50% en poids, la teneur en unités d'isocyanurate triallylique ne représentant pas plus de 5 parties en poids sur la base de 100 parties en poids du copolymère d'éthylène et d'acétate de vinyle.

2. Feuille transparente selon la revendication 1, caractérisée en ce que la teneur en unités d'acétate de vinyle représente 19 à 40% en poids.

3. Feuille transparente selon les revendications 1 ou 2, caractérisée en ce que la teneur en unités d'isocyanurate triallylique ne représente pas plus de 3 parties en poids.

4. Feuille transparente selon la revendication 3, caractérisée en e que la teneur en unités d'isocyanurate triallylique ne représente pas plus de 2 parties en poids.

5. Feuille transparente selon l'une quelconque des revendications 1 à 4, caractérisée en ce que la teneur en unités d'isocyanurate triallylique représente au moins 0.5 partie en poids.

6. Feuille transparente selon la revendication 5, caractérisée en ce que la teneur en unités d'isocyanurate triallylique représente au moins 1 partie en poids.

7. Feuille transparente selon l'une quelconque des revendications 1 à 6, caractérisée en ce que l'EVAT est obtenue par le mélange du copolymère d'éthylène et d'acétate de vinyle avec l'isocyanurate triallylique en vue de polymériser l'isocyanurate triallylique et de réticuler en même temps le copolymère d'éthylène et d'acétate de vinyle avec l'isocyanurate triallylique.

8. Feuille transparente selon la revendication 7, caractérisée en ce que la polymérisation et la réaction de réticulation sont effectuées thermiquement.

9. Feuille transparente selon la revendication 7, caractérisée en ce que la polymérisation et la réaction de réticulation sont effectuées par irradiation de rayons d'électrons ou d'ondes électromagnétiques, comme les rayons α.

10. Feuille transparente selon l'une quelconque des revendications 1 à 9, caractérisée en ce qu'il y a addition d'un agent de couplage au silane.

11. Feuille transparente selon l'une quelconque des revendications 1 à 10, caractérisée en ce qu'il y a addition d'un absorbant d'U.V.

12. Feuille transparente selon l'une quelconque des revendications 1 à 11, caractérisée en ce qu'il y a addition d'un antioxydant.

13. Feuille transparente selon l'une quelconque des revendications 1 à 12, caractérisée en ce qu'il y a addition d'un colorant.

14. Stratifié caractérisé en ce qu'il comprend une feuille transparente selon l'une quelconque des revendications 1 à 13, ainsi qu'une feuille de matériau inorganique.

15. Stratifié selon la revendication 14, caractérisé en ce que le matériau inorganique est du verre.

16. Stratifié selon la revendication 15, caractérisé en ce que la feuille transparente est interposée entre deux feuilles de verre pour produire une vitre de sécurité sandwich ou une fenêtre permettant de prévenir les écorchures du corps humain.

17. Stratifié selon la revendication 14, caractérisé en ce que le matériau inorganique est un métal.

18. Stratifié caractérisé en ce qu'il comprend une feuille transparente selon l'une quelconque des revendications 1 à 13 et une feuille de matériau organique.

19. Stratifié selon la revendication 18, caractérisé en ce que le matériau organique est un plastique.

20. Stratifié caractérisé en ce qu'il comprend une feuille de matériau inorganique, une feuille de matériau organique et une feuille transparente selon l'une quelconque des revendications 1 à 13 interposée entre celles-ci.

21. Stratifié selon la revendication 20, caractérisé en ce qu'un verre est utilisé comme matériau inorganique et un plastique comme matériau organique pour produire une fenêtre permettant de prévenir les écorchures du corps humain.

22. Stratifié caractérisé en ce qu'il comprend une feuille de verre, un module pour une cellule solaire et une feuille transparente selon l'une quelconque des revendications 1 à 13 interposée entre ceux-ci.

23. Stratifié caractérisé en ce qu'il comprend une feuille de verre, un panneau d'affichage à cristaux liquides et une feuille transparente selon l'une quelconque des revendications 1 à 13 interposée entre ceux-ci.

24. Stratifié caractérisé en ce qu'il comprend une feuille de verre, un panneau électroluminescent et une feuille transparente selon l'une quelconque des revendications 1 à 13 interposée entre ceux-ci.

25. Stratifié pour une fenêtre antibuée, une fenêtre anti-givre, une fenêtre de protection contre les ondes électromagnétiques ou une fenêtre à réflexion thermique, caractérisé en ce qu'il comprend une feuille transparente selon l'une quelconque des revendications 1 à 13, interposée entre deux feuilles de verre ou une feuille de verre et une feuille plastique, dans lequel un matériau conducteur ou semiconducteur est appliqué ou déposé par vaporisation sur la surface de la feuille de verre ou de la feuille plastique qui est en contact avec la feuille transparente.
